# EUROPÄISCHE PATENTSCHRIFT

(11) **EP 2 347 294 B1**
(45) Veröffentlichungstag und Bekanntmachung des Hinweises auf die Patenterteilung: **06.07.2016**
(21) Anmeldenummer: 09778641.2
(22) Anmeldetag: 22.09.2009
(51) Int. Cl.: G02B 21/00, G01N 21/64, G02B 21/36, G02B 27/58

(54) **VERBESSERTE VERFAHREN UND VORRICHTUNGEN FÜR DIE MIKROSKOPIE MIT STRUKTURIERTER BELEUCHTUNG**
IMPROVED METHODS AND APPARATUSES FOR STRUCTURED ILLUMINATION MICROSCOPY
PROCÉDÉS ET DISPOSITIFS AMÉLIORÉS POUR LA MICROSCOPIE À ÉCLAIRAGE STRUCTURÉ

(30) Priorität: 30.09.2008 DE 102008049878
(43) Veröffentlichungstag der Anmeldung: 27.07.2011
(73) Patentinhaber: Carl Zeiss Microscopy GmbH, 07745 Jena (DE)
(72) Erfinder: KEMPE, Michael, 07751 Kunitz (DE); KRAMPERT, Gerhard, 07743 Jena (DE); KLEPPE, Ingo, 07749 Jena (DE); WOLLESCHENSKY, Ralf, 07743 Jena (DE)
(74) Vertreter: Loritz, Rainer
(86) Internationale Anmeldenummer: PCT/EP2009/006818
(87) Internationale Veröffentlichungsnummer: WO 2010/037487

(56) Entgegenhaltungen:
- EP-A1- 1 617 259
- DE-A1- 10 155 002
- DE-A1- 19 908 883
- US-A- 5 671 085
- K.-P- PROLL ET AL.: "Application of a liquid-crystal spatial light modulator for brightness application in a microscopic topometry" APPLIED OPTICS, Bd. 39, Nr. 34, 1. Dezember 2000 (2000-12-01), Seiten 6430-6435, XP002560164

## Beschreibung

Die Erfindung betrifft Verfahren und Vorrichtungen zur hochauflösenden Abbildung einer mit einem Fluoreszenzfarbstoff markierten Probe mittels eines Mikroskops, wobei die Probe in mehreren Phasen sequentiell mit strukturiertem, gepulstem Anregungslicht beleuchtet und das von der Probe emittierte Fluoreszenzlicht pro Phase in ein jeweiliges strukturiertes Einzelbild aufgenommen wird, so dass aus den Einzelbildern ein Ergebnisbild mit erhöhter Auflösung rekonstruierbar ist.

Das Auflösungsvermögen von Mikroskopen ist aufgrund der Beugung des von der Probe aufgenommen Lichts im Mikroskopobjektiv von dessen Apertur und von der Wellenlänge des Lichts abhängig. Da der verwendbare Wellenlängenbereich des sichtbaren Lichts endlich ist, ist das Auflösungsvermögen eines Mikroskops grundsätzlich begrenzt (Abbe 1873). Bezogen auf die abzubildenden Ortsfrequenzen der Probe bedeutet das, dass der Träger (engl. "support") der optischen Übertragungsfunktion (engl. "optical transfer function"; OTF) des Mikroskops im Frequenzraum auf einen endlichen Bereich um den Koordinatenursprung begrenzt ist. In der Folge kann das Mikroskop nur solche Ortsfrequenzen abbilden, die in dem zentralen Intervall liegen, in dem der Träger nicht verschwindet.

Durch eine strukturierte Beleuchtung der Probe (engl. "structured illumination microscopy"; SIM) kann das Auflösungsvermögen lateral und axial etwa um einen Faktor zwei verbessert werden, wenn die Anregungsintensität der Beleuchtung und die Emissionsintensität der Probe linear zusammenhängen. Die SIM ist beispielsweise in US 5,671,085 offenbart. Sie beruht auf der Erzeugung einer räumlichen Lichtstruktur auf der zu untersuchenden Probe, beispielsweise durch sinusförmige Interferenz des Beleuchtungslichts hinter einem optischen Gitter. Aufgrund der Faltung der Anregungsstruktur mit der Punktbildfunktion des Mikroskopobjektivs im Ortsraum wird im Frequenzraum ein Bereich von Ortsfrequenzen der Probenstruktur, die außerhalb des Trägers der OTF liegen, in das zentrale Trägerintervall verschoben, wo sie die dortigen ursprünglichen Ortsfrequenzintensitäten überlagern. Die Lichtstruktur wird sequentiell in mehreren unterschiedlichen Phasenlagen erzeugt und in jeder Phasenlage jeweils ein Einzelbild aufgenommen. Aus den Einzelbildern, die die Überlagerungen der verschobenen und der ursprünglichen Ortsfrequenzen enthalten, kann mittels eines entsprechenden Gleichungssystems ein konsistentes Ergebnisbild rekonstruiert werden, das sowohl die ursprünglichen Ortsfrequenzen des Trägerintervalls als auch die ursprünglichen höheren, durch die strukturierte Beleuchtung zwischenzeitlich in das Trägerintervall verschobenen Ortsfrequenzen enthält. Dadurch hat das Ergebnisbild eine höhere Auflösung als eine konventionelle Einfachaufnahme mit gleichförmiger Beleuchtung. Jedoch erfordert die mehrfache Aufnahme mit verschiedener Phasenlage und Orientierung der Strukturierung eine hohe Stabilität der optischen Anordnung und der Probe während der gesamten Messung. Zudem reduziert die notwendige Mehrfachaufnahme die effektive Bildwiederholfrequenz. Auch muss die Strukturierung mit hoher Homogenität (Frequenz- und Phasenkonstanz der Strukturierung) in die Probe abgebildet werden.

Eine erhebliche Verbesserung des Auflösungsvermögens kann erzielt werden, indem eine Anregung der Probe (mittels Beleuchtung oder auf andere Weise) derart erfolgt, dass ein nichtlinearer Zusammenhang zwischen der Anregungsintensität und der von der Probe emittierten Lichtintensität entsteht (engl. "saturated pattern excitation microscopy"; SPEM). Die SPEM ist beispielsweise in DE 199 08 883 A1 offenbart, Im Fall der Fluoreszenzmikroskopie gelingt eine nichtlineare Anregung beispielsweise durch eine hohe Beleuchtungsintensität, die im Bereich der Beleuchtungsstruktur zu einer teilweisen Sättigung der Anregung des Fluoreszenzfarbstoffs führt. Dadurch werden noch höhere Ortsfrequenzen von Objektstrukturen in das Intervall des Trägers der OTF verschoben als bei der SIM. Durch Berücksichtigung der nichtlinearen Wechselwirkung in dem zu lösenden Gleichungssystem können auch diese höheren Frequenzen rekonstruiert werden. Allerdings sind bei SPEM kleinere Phasenschritte und damit noch mehr Einzelbilder als bei SIM erforderlich. Die nichtlineare Probenwechselwirkung belastet die Probe und deren Farbstoffe durch Bleichen. Daneben hängt die Nichtlinearität außer von den Beleuchtungsbedingungen auch von den lokalen Umgebungsbedingungen in der Probe ab. Das kann dazu führen, dass an verschiedenen Stellen in der Probe deutlich unterschiedliche Nichtlinearitäten erreicht werden, was die Rekonstruktion des Ergebnisbilds erschwert. Unter Umständen können die Umgebungsbedingungen in der Probe so nachteilig für eine nichtlineare Wechselwirkung sein, dass die Anwendung der SPEM unmöglich ist.

Grundsätzlich ist bei SIM und SPEM die durch die Rekonstruktion erzielbare Auflösung durch das Signal-Rausch-Verhältnis (engl. "signal-to-noise ratio"; SNR) bei der Aufnahme der Einzelbilder begrenzt.

Der Erfindung liegt die Aufgabe zugrunde, Verfahren und Vorrichtungen der eingangs genannten Art so zu verbessern, dass möglichst hohe Auflösungen erzielt werden können.

Die Aufgabe wird gelöst durch Verfahren beziehungsweise Vorrichtungen, welche die in den unabhängigen Ansprüchen angegebenen Merkmale aufweisen.

Vorteilhafte Ausgestaltungen sind in den abhängigen Ansprüchen angegeben.

Kern der Erfindung ist die Optimierung der in den Einzelbildern enthaltenen Rohdaten, um im Ergebnisbild eine bestmögliche Auflösung auch bei problematischen Proben zu erreichen. Eine solche Optimierung kann erfindungsgemäß auf unterschiedlichen Wegen erfolgen.

Erfindungsgemäß wurde erkannt, dass die Auflösung bei SIM und SPEM unter anderem durch folgende Faktoren beeinträchtigt wird: Sowohl durch das optische System (beispielsweise in Form von Aberrationen) als auch durch die optischen Probeneigenschaften, vor allem von dickeren Proben, wird die Phase des Beleuchtungslichts und des Fluoreszenzlichts lokal verzerrt. Außerdem sinkt der Modulationskontrast der Strukturierung mit zunehmender Eindringtiefe in die Probe aufgrund von Streuung und Aberrationen durch lokale und globale Brechungsindex-Variationen, was als Fehlanpassung bezeichnet wird. Dieser Effekt hängt auch von der verwendeten Frequenz der Strukturierung ab. Niederfrequentere Modulationen lassen sich tiefer in die Probe abbilden, führen aber auf der anderen Seite auch zu einer geringeren Auflösung im Ergebnisbild. So ist je nach untersuchter Probe eine andere Kombination von Strukturierungsparametern (wie der relative Winkel und die relative Intensität der die Strukturierung durch Interferenz hervorrufenden Strahlanteile) erforderlich, um ein optimales Ergebnisbild zu erhalten. Bei bereits angeregten Farbstoffmolekülen besteht bei weiterer Anregung in einen höheren Energiezustand eine hohe Wahrscheinlichkeit für irreversibles Bleichen, was eine Verringerung des Signal-Rausch-Verhältnisses und damit eine verminderte Auflösung der Rekonstruktion zur Folge hat. Daneben ergibt sich sowohl bei zu geringer (Unterbelichtung) als auch bei zu großer (Überbelichtung) elektrischer oder elektronischer Verstärkung des aufgenommenen Fluoreszenzlichts ein geringer Bildkontrast, der die Rekonstruktion erschwert oder verhindert.

Erfindungsgemäß erfolgt eine Aufnahme des Fluoreszenzlichts in Zwischenbilder mit einer signifikant höheren Bildwiederholfrequenz als bei der Aufnahme der Einzelbilder und es wird eine optimale Einstellung für mindestens einen Parameter "Pulsabfolge der Beleuchtung" durch Rückkopplung anhand der Zwischenbilder und durch Variation des Parameters ermittelt, indem anhand der Zwischenbilder mittels eines Bildgebers, mittels dessen die Strukturierung des Anregungslichts erzeugt wird, die Pulsabfolge lokal variiert wird. Eine Einstellung ist im Sinne der Erfindung ein- oder mehrdimensionaler Wert. Zielgrößen können unter anderem die Aufnahmezeit, das Signal-Rausch-Verhältnis oder der Dynamikumfang des detektierten Fluoreszenzsignals sein. Durch die erfindungsgemäße Optimierung kann die Fluoreszenzausbeute und damit das Signal-Rausch-Verhältnis mit geringem Aufwand verbessert und ein Bleichen der Probe vermindert werden. In der Folge wird die von dem Signal-Rausch-Verhältnis abhängige Auflösung verbessert. Daneben kann die Optimierung auch der Systemsicherheit dienen, da eine Beschädigung der bei der Aufnahme verwendeten Kameras durch Überbelichtung verhindert werden kann, indem deren Spezifikationen als Randbedingungen in die Optimierung einfließen. Unter dem Parameter "Pulsabfolge" werden dabei die Pulsdauer und/oder die Pulswiederholfrequenz verstanden.

Die optimale Einstellung kann vollautomatisch sowohl ermittelt als auch bei einer späteren Aufnahme von Einzelbildern verwendet werden. Alternativ kann sie in Art einer Halbautomatik auf Anforderung eines Benutzers ermittelt und als Vorgabe für eine freie Einstellung des Parameters durch einen Benutzer verwendet werden. Es ist auch denkbar, dass die optimierte Einstellung dem Benutzer lediglich zur Bestätigung vorgelegt wird, wobei er alternativ beispielsweise die Messung abbrechen kann. Selbstverständlich können in einem Optimierungsdurchgang für mehrere Parameter optimale Einstellungen ermittelt werden.

Die bei der Optimierung relevanten Größen lassen sich unterteilen in a priori bekannte oder bestimmbare Informationen und in solche Parameter, die erst in Art einer Rückkopplung anhand von aufgenommenen Bildern gewonnen werden können. A priori bekannt oder zumindest bestimmbar sind beispielsweise Farbstoffeigenschaften (Bleichrate, Schaltzyklen für eine SPEM-Anregung und Anregungs- und Emissionsspektren sämtlicher Bänder), Eigenschaften des Einbettmediums der Probe (Brechungsindex, Autofluoreszenzspektren) sowie die gewünschte Eindringtiefe. Dementsprechend wird die optimale Einstellung des zu optimierenden Parameters oder auch mehrerer zu optimierender Parameter erfindungsgemäss durch eine Rückkopplung anhand der Einzelbilder, anhand von zusätzlichen Zwischenbildern oder anhand eines Signals eines Punktdetektors, auf den ein Bruchteil des Fluoreszenzlichts ausgekoppelt wird, und durch Variation des Parameters ermittelt. So kann beispielsweise die Pulswiederholfrequenz anstelle einer groben Berechnung aus einer a priori bekannten Brechungsindex-Fehlanpassung der Probe mit höherer Genauigkeit durch Auswertung von Einzelbildern optimiert werden, indem mehrere Einzelbilder mit unterschiedlicher Pulswiederholfrequenz aufgenommen und analysiert werden. Als Zwischenbilder werden im Sinne der Erfindung alle Bilder bezeichnet, die nicht bei einer späteren Rekonstruktion verwendet werden. Insbesondere können die Einzelbilder durch Integration aus mehreren Zwischenbildern zusammengesetzt sein, wenn deren Bildwiederholfrequenz entsprechend hoch ist. Sollen mehrere Parameter optimiert werden, muss die Variation entsprechend mehrdimensional durchgeführt werden. In besonders bevorzugten Ausführungsformen erfolgt die Variation des Parameters bei im wesentlichen konstanter mittlerer Leistung des Anregungslichts, da eine Signalerhöhung, also ein verbessertes Signal-Rausch-Verhältnis, dann nur durch verringertes Bleichen entstehen kann. Als konstante mittlere Leistung des Anregungslichts wird vorzugsweise eine solche verwendet, die auch bei der Aufnahme der zur Rekonstruktion zu verwendenden Einzelbilder eingesetzt wird.

Alternativ zur Variation und experimentellen Rückkopplung kann zum Ermitteln der optimalen Einstellung des Parameters, vorzugsweise unter Verwendung der bekannten a-priori-Informationen, eine Simulation von Beleuchtung, Antwort der Probe und Aufnahme durchgeführt werden. Zweckmäßigerweise wird auch hierbei eine Variation des zu optimierenden Parameters durchgeführt, um die optimale Einstellung zu ermitteln. Dadurch wird die Probe nicht belastet, da Bleichen vollständig vermieden wird. Dennoch kann die optimale Einstellung des zu optimierenden Parameters mit hoher Genauigkeit optimiert werden. Die Simulation ist insbesondere bei mehreren zu optimierenden Parametern vorteilhaft zur Probenschonung.

Vorzugsweise wird eine Einstellung als optimal ermittelt, wenn sich (insbesondere bei einer Variation) in einem Zwischenbild, in einem Einzelbild oder in dem Ergebnisbild bei dieser Einstellung ein maximales oder zumindest ein vorgegebenes Signal-Rausch-Verhältnis ergibt. Dadurch kann die Auflösung des Ergebnisbilds automatisch maximiert beziehungsweise vom Benutzer beeinflusst werden. Aufgrund der Abhängigkeit des Auflösungsvemögens der SIM- und SPEM-Verfahren ist ein möglichst großes Signal-Rausch-Verhältnis in den Einzelbildern essentiell für eine möglichst artefaktfreie Rekonstruktion.

Zweckmäßig sind darüber hinaus Ausführungsformen, in denen beim Ermitteln der optimalen Einstellung eine vorgegebene Gewichtung weiterer Optimierungsziele neben einer Gewichtung für das Signal-Rausch-Verhältnis berücksichtigt wird. Der Benutzer kann so Prioritäten für die Optimierung festlegen. Beispielsweise kann die Optimierung primär auf eine kurze Aufnahmezeit und nur sekundär auf ein maximales Signal-Rausch-Verhältnis durchgeführt werden. Ein weiteres mögliches Optimierungsziel, das primär oder in einer niedrigeren Rangfolge verfolgt werden kann, ist eine möglichst volle Aussteuerung des Dynamikbereichs der aufnehmenden Kamera.

In einer ersten alternativen Ausprägung der Rückkopplung erfolgt die Aufnahme des Fluoreszenzlichts für die Optimierung alternativ oder zusätzlich zur Aufnahme der Einzelbilder in Zwischenbilder, vorteilhafterweise mit einer Bildwiederholfrequenz, die etwa der Bildwiederholfrequenz bei der Aufnahme der Einzelbilder entspricht, so dass das Fluoreszenzlicht über eine Vielzahl von Pulsabfolgezyklen integriert wird.

In einer zweiten alternativen Ausprägung der Rückkopplung erfolgt die Aufnahme des Fluoreszenzlichts in Zwischenbilder vorteilhafterweise mit einer signifikant höheren Bildwiederholfrequenz als bei der Aufnahme der Einzelbilder. Die hohe Bildwiederholfrequenz ermöglicht eine feinere Analyse des Anregungs- und Emissionsverhaltens der Probe. Durch Aufsummierung von Zwischenbildern können Zwischenbilder oder auch Einzelbilder mit längeren Belichtungszeiten berechnet werden. Dabei können Zwischenbilder mit unterschiedlichen Belichtungszeiten zweckmäßigerweise mittels eines Rechners normiert werden.

Es ist vorteilhaft, in Verbindung mit der hochfrequenten Aufnahme von Zwischenbildern mittels eines lokal variablen Bildgebers die Pulsabfolge lokal, insbesondere pixelweise, zu variieren. Als Bildgeber können beispielsweise räumliche Lichtmodulatoren (engl. "spatial light modulator"; SLM) wie Mikrospiegelfelder (engl. "digital micro-mirror device"; DMD), Flüssigkristallanzeigen (engl. "light crystal display"; LCD) oder LCoS (engl. "liquid crystal on silicon") verwendet werden. Ein Bildgeber ist zweckmäßigerweise in einer Zwischenbildebene des Beleuchtungsstrahlengangs angeordnet. Neben einer globalen Variation der Pulsabfolge im gesamten Beleuchtungsfeld kann mit der lokalen Variation nicht nur im Rahmen der rückgekoppelten Optimierung die Pulsabfolge an unterschiedliche lokale Gegebenheiten auf der Probe (beispielsweise mit unterschiedlichen Fluoreszenzfarbstoffen gefärbte Regionen) angepasst, sondern auch die Dynamik der Einzelbilder erweitert werden. Die Dynamik kann global oder lokal bis zu einer vollen Aussteuerung der aufnehmenden Kamera oder sogar darüber hinaus erweitert werden. Die Dynamikerweiterung gelingt insbesondere durch Rückkopplung mit Mittelwerten ganzer Zwischenbilder oder mit Regionen oder Pixeln von Zwischenbildern oder mit auch Einzelbildern. Beispielsweise kann bei der Aufnahme von Zwischenbildern, die zu einem Einzelbild aufsummiert werden, die Beleuchtung und/oder die Bildaufnahme (Belichtung) in einer Region oder in einem Pixel beendet werden, wenn ein ausreichendes Signal-Rausch-Verhältnis bei minimalem Bleichen oder aber ein vorgegebener Intensitätsschwellwert erreicht ist, während die Beleuchtung/Bildaufnahme auf dem Rest der Probe fortgesetzt wird. Die sich auf diese Weise ergebenden Beleuchtungs- und Belichtungsvariationen werden zweckmäßigerweise mit den aufgenommenen Bilddaten gespeichert. Einzelbilder, bei denen während ihrer Aufnahme die Pulsabfolge variiert wurde, werden in ihrem Dynamikumfang vor der Rekonstruktion des Ergebnisbilds erweitert, indem sie anhand der gespeicherten Variationsinformation entsprechend der Variation der Pulsabfolge hinsichtlich ihrer Intensität korrigiert werden. Die gespeicherte Information über die erweiterte Dynamik kann unter Berücksichtigung der Dynamik des jeweiligen Visualisierungsmediums auch für eine optimale Wiedergabe genutzt werden. Eine globale oder lokale Erweiterung der Dynamik, insbesondere mittels eines lokal variablen Bildgebers kann auch unabhängig von der Optimierung durchgeführt werden.
Auf einen zusätzlichen Bildgeber kann vorteilhafterweise verzichtet werden, indem mittels desselben Bildgebers sowohl die Variation der Pulsabfolge als auch die Strukturierung des Anregungslichts erzeugt wird.
Es ist vorteilhaft, während der Aufnahme ein Messabbruchkriterium zu prüfen, während der Messung anzuzeigen und die Aufnahme bei Erfüllung des Messabbruchkriteriums zu beenden oder zumindest zu vereinfachen, da die erfindungsgemäßen Verfahren relative lange dauern. Als Vereinfachung kann beispielsweise während einer SPEM-Messung auf eine reine SIM-Messung umgeschaltet werden, wenn anhand einer Rückkopplung mit Zwischen- oder Einzelbildern ermittelt wird, dass bei der Anregung kein ausreichender Grad an Nichtlinearität erzielt wird.

Vorteilhafterweise wird als Messabbruchkriterium geprüft ob ein Modulationskontrast kleiner ist als ein vorgegebener Kontrastschwellwert oder ob eine Bewegungsweite der Probe größer als ein Bewegungsschwellwert ist. Der Modulationskontrast kann beispielsweise fortlaufend in allen Zwischen- oder Einzelbildern bestimmt werden. Eine Bewegung der Probe kann beispielsweise durch Drift entstehen. Eine Bewegungswarnung kann beispielsweise aus Korrelationen der Zwischen- oder Einzelbilder zueinander gewonnen werden, wobei die Modulationsfrequenz der strukturierten Beleuchtung vorher aus den Bildern herausgefiltert werden muss, um die gewollte Änderung der Phasenlage zu erhalten.

Eine andere Möglichkeit zur Identifikation und Analyse von Probenbewegungen ist die zeitgleiche Aufnahme von Bildern mit differentiellem Interferenzkontrast (engl. "differential interference contrast"; DIC) im Durchlicht. Dies ist insbesondere bei Untersuchungen an lebenden Zellen vorteilhaft.

Die erfindungsgemäßen Optimierungen müssen nicht an regulären Proben durchgeführt werden, sondern können auch besonders vorteilhaft an Testpräparaten durchgeführt werden, anhand derer die optimale(n) Einstellung(en) als a-priori-Information für die Bildaufnahme an regulären Proben gewonnen werden können. Für die strukturierte Beleuchtung besonders vorteilhafte Testpräparate sind homogene, optisch dünne (weniger als 100 nm dicke) Multifarb-Farbstofffilme ohne Brechungsindex-Fehlanpassung zur Immersionsflüssigkeit des Objektivs, also ohne Interferenzen, und Testproben mit Multifarbperlen einer Größe zwischen 200 nm und 500 nm. Insbesondere die Optimierung des Modulationskontrastes und der Phasenkonstanz der Strukturierung ist mit den Farbstofffilmen besonders gut möglich, während die Perlentestproben für eine Kalibrierung der Kolokalisation in mehreren Farbkanälen vorteilhaft sind.

Vorzugsweise wird das Fluoreszenzlicht konfokal detektiert, insbesondere mittels eines Laser-Scanning-Mikroskops. Dadurch wird außerfokales Licht wirksam diskriminiert und somit das Signal-Rausch-Verhältnis verbessert. Durch die Kombination von konfokaler Detektion mit strukturierter Linienbeleuchtung wird für die Rückkopplung möglicherweise störender Untergrund bereits bei der Bildaufnahme reduziert.

Alle erfindungsgemäßen Verfahren können miteinander kombiniert werden.

Nachfolgend wird die Erfindung anhand von Ausführungsbeispielen näher erläutert.

In den Zeichnungen zeigen:
Fig. 1 eine schematische Darstellung eines Weitfeldmikroskops,
Fig. 2 eine schematische Darstellung eines Strahlengangs eines weiteren Weitfeldm ikroskops,
Fig. 3 eine schematische Darstellung eines Laser-Scanning-Mikroskops,
Fig. 4 ein Pseudo-Flussdiagramm des grundlegenden, auf Rückkopplung und Nachregelung basierenden Optimierungsverfahrens,
Fig. 5 ein Pseudo-Flussdiagramm eines beispielhaften Optimierungsverfahrens,
Fig. 6 eine schematische Darstellung eines weiteren Weitfeldmikroskops mit zeitlich und räumlich modulierter Anregung und Rückkopplung zur Optimierung und
Fig. 7 eine schematische Darstellung eines weiteren Weitfeldmikroskops mit faseroptischem Strukturierungsmodul und lokaler Beleuchtungsvariation.
In allen Zeichnungen tragen übereinstimmende Teile gleiche Bezugszeichen.

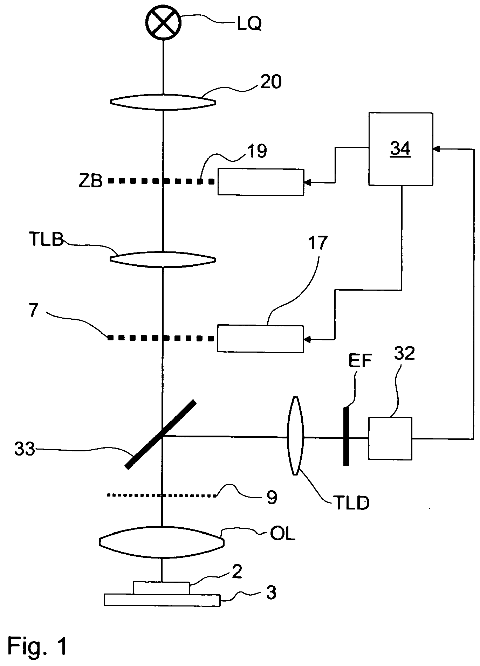

Fig. 1 zeigt den Strahlengang einer exemplarischen Anordnung für die Weitfeld-Fluoreszenzmikroskopie, worin die erfindungsgemäß verbesserten SIM- und SPEM-Verfahren verwendet werden können, in einer schematischen Darstellung. Die Probe 2 ist auf einem positionierbaren Probenhalter 3 vor dem Mikroskopobjektiv 5 angebracht. Eine Maske mit Phasenstrukturen gemäß DE 10 2007 047 466 A1, ist als Strukturierungsmodul 7 in der Nähe der Pupille 9 des Mikroskopobjektives OL oder einer dazu konjugierten Ebene angeordnet, um auf beziehungsweise in der Probe 2 eine strukturierte Lichtverteilung zu erzeugen. Die Maske des Strukturierungsmoduls 7 kann mit einem Aktuator 17 bewegt werden, wobei es sich um einen Schrittmotor zur Rotation der Maske oder auch einen Linearantrieb handeln kann. Ein Schrittmotor kann dabei eine runde Maske direkt oder aber indirekt, über ein Getriebe oder eine andere mechanische Einheit antreiben. Ein Bildgeber 19, beispielsweise ein LCD, steht als zeitlicher und räumlicher optischer Modulator in einer durch die Tubuslinse TLB erzeugten Zwischenbildebene ZB, welche konjugiert zur Probenebene ist. Die Lichtquelle LQ beleuchtet das Element 19 und kann zum Beispiel ein Laser, eine LED, eine Quecksilber-Hochdrucklampe oder eine konventionelle Glühlampe sein. Zusätzlich kann eine optionale Kollimationsoptik 27 vorgesehen werden. Die Lichtquelle LQ kann monochromatisch sein oder mehrere Wellenlängen simultan oder auch zeitsequentiell emittieren. Bei einer bevorzugten Implementierung der Erfindung befindet sich die Phasenmaske des Strukturierungsmoduls 7 in oder in der Nähe der Pupille 9 des Objektivs. Konstruktionsbedingt ist die Pupille zwar bei vielen Mikroskopobjektiven nicht direkt zugänglich. In diesem Fall kann jedoch eine Zwischenabbildung mit einer Relais-Optik (engl. "relay optics") in eine frei zugängliche Zwischenbildebene erfolgen, in deren Nähe die Phasenmaske des Strukturierungsmoduls 7 angeordnet werden kann. In Abhängigkeit davon, wie weit sich die Phasenmaske 7 von der Pupillenebene entfernt befindet, wird sich der Durchmesser der einzelnen Beugungsordnungen mit dem Abstand zur Pupillenebene vergrößern. Mittels des Bildgebers 19 kann das von der Lichtquelle LQ emittierte Licht einerseits zeitlich in eine Pulsabfolge zur Fluoreszenzanregung und andererseits quer zur optischen Achse zweidimensional pixelweise untergliedert werden. Des weiteren ist hinter einer Tubuslinse TLD ein ortsauflösendes Detektorfeld 32, beispielsweise ein CCD, als Kamera zur Bildaufnahme vorgesehen. Bei der hier beschriebenen Anordnung für die Fluoreszenzdetektion sind ein Hauptfarbteiler 33 zur Trennung von Fluoreszenzlicht und Anregungslicht sowie ein Emissionsfilter EF vorgesehen.

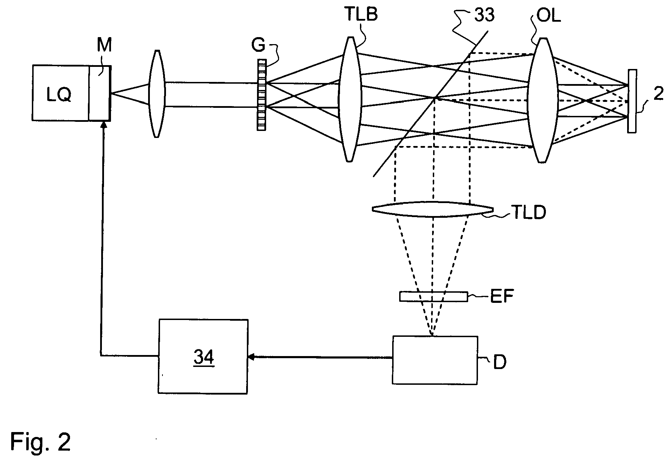

Fig. 2 zeigt die Strahlengänge in einem Weitfeldmikroskop, bei dem die Beleuchtungsstruktur als Abwandlung der Anordnung nach Fig. 1 mittels eines Strukturierungsmoduls erzeugt wird, das ein starres Gitter G umfasst, das in mehrere unterschiedliche Phasenlagen verschiebbar oder verdrehbar ist. Die Lichtquelle LQ ist zur Fluoreszenzanregung gepulst oder mit einem schnellen optischen Modulator M ausgerüstet, wobei die Pulsabfolge in beiden Fällen von der Steuereinheit 34 gesteuert wird. Der gezeichnete Strahlverlauf ist beispielhaft und kann durch andere Strahlengänge ersetzt werden, um eine Weitfeldbeleuchtung und -detektion, wie sie dem Fachmann geläufig ist, oder einen konfokalen Strahlengang eines Scanning-Mikroskopes oder eines Mikroskopes mit parallel konfokaler Beleuchtung- und Detektion wie bei der Verwendung von Nipkowscheiben, darzustellen.

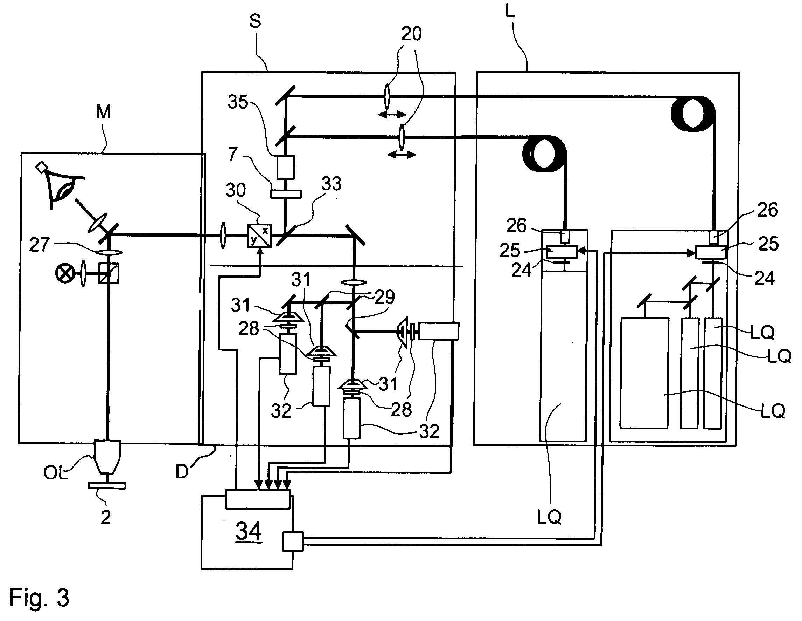

Fig. 3 zeigt eine exemplarische Anordnung, worin die erfindungsgemäß verbesserten SIM- und SPEM-Verfahren ebenfalls verwendet werden können, für die abtastende Fluoreszenzmikroskopie mittels eines Laser-Scanning-Mikroskops (LSM) in schematischer Darstellung. Das LSM wird mittels einer Steuereinheit 34 gesteuert wird. Das LSM ist modular aus einem Beleuchtungsmodul L mit Lasern als Lichtquellen LQ, einem Abtastmodul S (engl. "scanning module"), einem Detektionsmodul D und der Mikroskopeinheit MI mit dem Mikroskopobjektiv OL zusammengesetzt. Das Licht der Laserlichtquellen LQ kann durch Lichtklappen 24 und Abschwächer 25 von der Steuereinheit 34 zum Zweck einer gepulsten Beleuchtung beeinflusst werden, bevor es über Lichtleitfasern und Koppeloptiken 20 in die Abtasteinheit S eingespeist und hinter einer Zylinderoptik 35 und einem Strukturierungsmodul 7 vereinigt wird. Das Strukturierungsmodul 7 kann beispielsweise verschiebbar oder verdrehbar als Gitter oder Phasenmaske für eine Aufnahme in mehreren Phasenstufen (Phasenschritten) ausgebildet sein. Die Zylinderoptik dient der Strahlformung für eine linienförmige Beleuchtung. Über den Hauptstrahlteiler 33 und die X-Y-Abtasteinheit 30, die zwei Galvanometerspiegel aufweist (nicht dargestellt), gelangt das Beleuchtungslicht durch das Mikroskopobjektiv OL zur Probe 22, wo es ein linienförmiges Fokusvolumen (nicht abgebildet) beleuchtet. Von der Probe emittiertes Fluoreszenzlicht gelangt durch das Mikroskopobjektiv 21 über die Abtasteinheit 30 durch den Hauptstrahlteiler 30 in das Detektionsmodul D. Zur Fluoreszenzdetektion kann der Hauptstrahlteiler 30 beispielsweise als dichroitischer Farbteiler ausgebildet sein. Das Detektionsmodul D weist mehrere Detektionskanäle mit jeweils einer Schlitzblende 31, einem Filter 28 und einem zeilenförmigen (linearen) Detektorfeld 32 (engl. "detector array") mit mehreren Detektionselementen auf. Die Detektionskanäle sind durch Farbteiler 29 separiert. Die konfokalen Schlitzblenden 31 dienen der Diskriminierung von Probenlicht, das nicht aus dem Fokusvolumen stammt. Die Detektorfelder 32 detektieren daher ausschließlich Licht aus dem Fokusvolumen. Das konfokal beleuchtete und aufgenommene Fokusvolumen der Probe 22 kann mittels der Abtasteinheit 30 über die Probe 22 bewegt werden, um mittels der Detektoren 32 als Kamera pixelweise ein Bild aufzunehmen, indem die Galvanometerspiegel der Abtasteinheit 30 gezielt verdreht werden. Sowohl die Bewegung der Galvanometerspiegel als auch das Schalten der Beleuchtung mittels der Lichtklappen 24 oder der Abschwächer 25 werden unmittelbar von der Steuereinheit 34 gesteuert. Die Datenaufnahme von den Detektorfeldern 32 erfolgt ebenfalls über die Peripherieschnittstelle 4.

Um die Fluoreszenzausbeute sowie das Signal-Rausch-Verhältnis zu erhöhen und Bleichen zu vermeiden, ist es zweckmäßig, eine kurze, gepulste Anregung im Bereich von einigen Nanosekunden zu verwenden, wobei zwischen den Anregungspulsen eine Pause von einigen Mikrosekunden besteht. Dadurch kann eine Verringerung der Anregung aus dem untersten Triplettzustand in höhere Triplettzustände erzielt werden. Die Kamera zur Bildaufnahme integriert dabei mit üblichen Belichtungszeiten, also über viele Pulsabfolgezyklen. Die durch die niedrige Pulswiederholfrequenz und die kurze Pulsdauer verringerte mittlere Anregungsleistung wird zumindest partiell durch eine erhöhte Fluoreszenzausbeute kompensiert. Als Lichtquellen kommen gepulste Laser (modengekoppelte oder gütegeschaltete Laser), gegebenenfalls mit einem schnellen optischen Modulator (engl. "pulse picker") zur Reduktion der Pulswiederholfrequenz, beispielsweise einem akustooptischen Modulator (AOM) oder schnelle, direkt über den Treiberstrom modulierte Laserdioden oder Leuchtdioden (LED) in Frage.

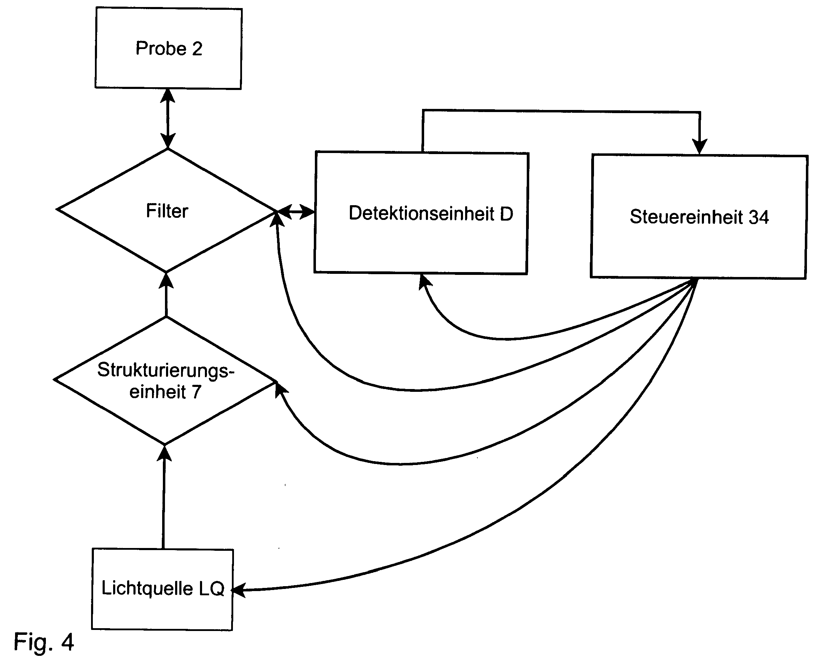

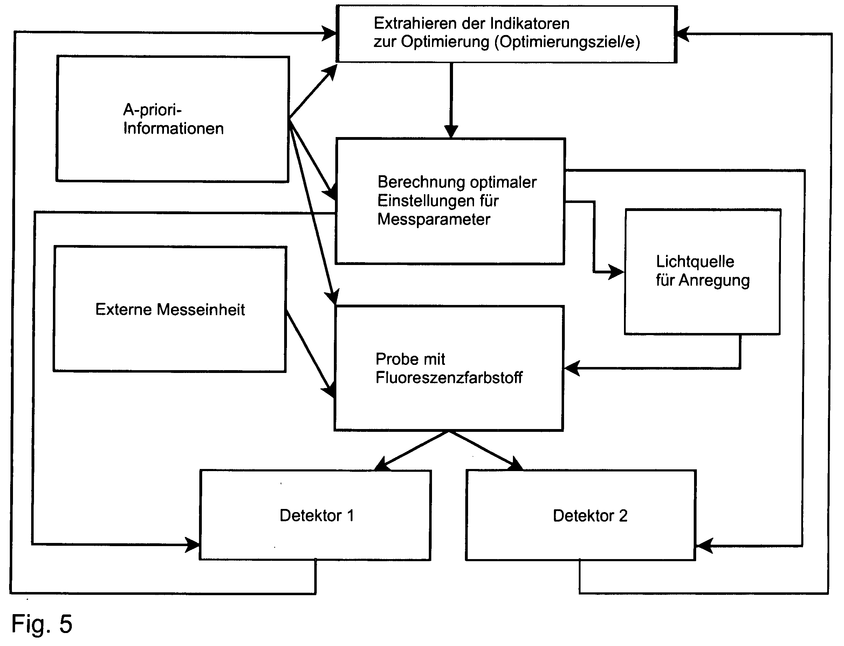

Da in der hochauflösenden Fluoreszenzmikroskopie mittels SIM oder SPEM die Erhöhung der Fluoreszenzausbeute und die Bleichreduktion stark farbstoff- und probenabhängig ist, wird eine feedbackgesteuerte Optimierung der Fluoreszenzausbeute durch Variation der Pulssequenz (Pulsdauer und/oder Pulswiederholrate) bei konstanter mittlerer Leistung (dadurch kann Signalerhöhung nur durch Bleichreduktion entstehen) durchgeführt. Fig. 4 stellt die Rückkopplung aus dem detektierten Fluoreszenzsignal zur Nachregelung der Lichtquelle LQ, der Strukturierungseinheit 7 und der Filter dar. Fig. 5 zeigt eine beispielhafte Optimierung für eine Mikroskopmessung mit zwei Detektoren, einer externen Messeinheit und einer Anregungslichtquelle unter Berücksichtigung von a priori bekannten Informationen, beispielsweise über den Fluoreszenzfarbstoff, in Form eines Pseudo-Flussdiagramms.

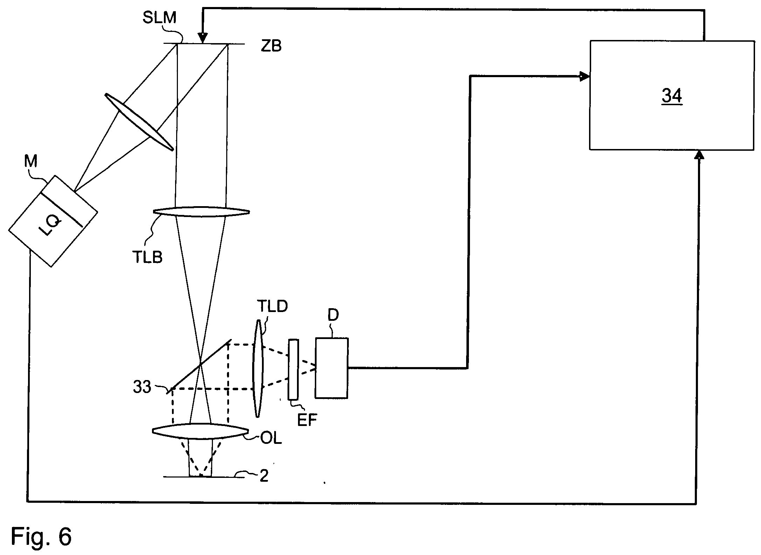

Eine probenabhängige Optimierung der Bildgüte ist auch auf Basis anderer Beleuchtungs- oder Bildaufnahmeparameter möglich. Eine Möglichkeit besteht in der Optimierung der Anregung durch Auswerten des Fluoreszenzsignals, bis ein vorgegebenes Signal-Rausch-Verhältnis erreicht ist. Besonders vorteilhaft ist dabei die lokale Variation der Anregungszeit oder der Anregungsintensität in Form der Pulsabfolge mittels eines Bildgebers (DMD, LCD-Modulator, LCoS-Modulator - welche vorteilhaft zugleich der Strukturierung dienen können) unter Auswertung des Kamerabildes, welches mit hoher Bildwiederholrate eingelesen wird, was in Fig. 6 schematisch abgebildet ist. Für eine Position und Orientierung der Strukturierung wird dabei über alle so aufgenommenen Einzelbilder gemittelt. Möglich und technisch besonders einfach ist aber auch die globale, das ganze Bild bei einer jeweiligen Stellung des Strukturierungsmoduls betreffende Variation der Anregungszeit oder der Anregungsintensität mittels direkter Modulation des Lasers unter Auswertung wie oben oder durch Auswertung eines mittleren Signals eines mit der Kamera kalibrierten Punktdetektors, der einen durch einen Strahlteiler ausgekoppelten Bruchteil des Fluoreszenzlichtes detektiert. In beiden Fällen wird vor der Rekonstruktion des Ergebnisbilds durch Verrechnung der strukturierten Bilder auf Basis der bekannten lokalen oder globalen Variation der Anregungszeit oder der Anregungsintensität eine Intensitätskorrektur vorgenommen.

Dabei ergeben sich zugleich eine Dynamikerweiterung und, unter Berücksichtigung der Dynamik des Visualisierungsmediums, die Möglichkeit der Nutzung dieser Informationen für eine optimale Darstellung der Bilddaten. Bei dieser Optimierung ist zur Diskriminierung von außerfokalem Licht (welches unter Umständen das detektierte Fluoreszenzsignal dominieren kann) eine strukturierte linienförmige Beleuchtung mit konfokaler Detektion zu bevorzugen.

Von der durch die Steuereinheit 34 ausgeführten Steuersoftware werden die Belichtungszeit und/oder die Anregungspulsabfolge ausgehend von einer Benutzerauswahl so verändert, dass in jedem Einzelbild der Dynamikbereiches der Kamera voll ausgesteuert wird. Dabei kann die Wichtung zwischen Kameraverstärkung, Pulsabfolge und Belichtungszeit durch a-priori-Information über die Bleichrate des Farbstoffes erfolgen oder beispielsweise durch Messen dieser Bleichrate an Stellen in der Probe, die vom Benutzer als uninteressant für die Bildaufnahme markiert wurden (beispielsweise eine benachbarte Zelle). Zusätzlich kann bei vorhandener Aufnahmezeit der Dynamikbereich der Aufnahme noch über den Dynamikbereich der Kamera hinaus erweitert werden durch Aufnahme von allen Einzelbildern des strukturierten Beleuchtungsbildstapels mit mehreren Belichtungsparametern (Integrationszeit, Pulsabfolge und Kameraverstärkung) und Verrechnen dieser Bilder zu einem Bildstapel mit erweiterten Dynamikbereich. Insbesondere kann der Dynamikbereich nicht nur durch Anpassen der Pulsabfolge global im Bild sondern auch lediglich lokal optimal erweitert werden. Eine bevorzugte Ausgestaltung davon ist bei strukturierter Linienbeleuchtung die Anpassung der Linienintensität, so dass die Kamera in jeder Zeile ausgesteuert ist und die Aufzeichnung der benutzten Linienintensität pro Zeile.

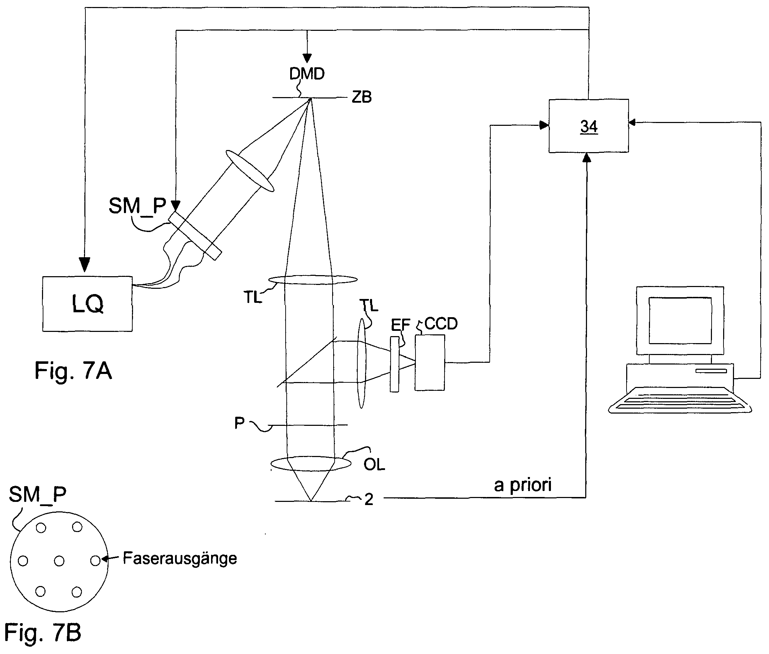

Eine weitere Anordnung zur lokalen Optimierung der Beleuchtungs- und Aufnahmeparameter sowie zur Dynamikerweiterung ist in Fig. 7 schematisch dargestellt. Sie enthält einen SLM, beispielsweise ein DMD, in einem Zwischenbild ZB, der die strukturierte Beleuchtung lokal nachregelt, um maximalen Dynamikbereich der Aufnahme zu erreichen. Die Strukturierung kann in diesem Fall durch ein Strukturierungsmodul SM_P in der Pupillenebene erzeugt werden, das die Fouriertransformierte der gewünschten strukturierten Beleuchtung in der Probe 2 bereitstellt. Eine Ausgestaltung des Strukturierungsmoduls SM_P mit Lichtleitfasern ist in Teilfigur 7B dargestellt und in DE 10 2007 047 466 Albeschrieben. Die für die Dynamikerweiterung relevante Information ist in der benutzten lokalen Laserintensität und der detektierten Fluoreszenz enthalten. Aus diesen beiden Informationen kann nun ein Bildstapel für den strukturierten Beleuchtungsalgorithmus mit erweitertem Dynamikbereich berechnet und so die Verrechnungsartefakte vermindert werden, da die Artefaktamplitude wesentlich vom SNR in den Einzelbildern abhängt.

Da bei SPEM die Nichtlinearität außer von den Umgebungsbedingungen auch von den Beleuchtungsbedingungen, nämlich insbesondere der Anregungsintensität und der Intensität des Aktivierungslasers, abhängt, werden vorzugsweise auch diese räumlich (beziehungsweise zeitlich für verschiedene Einzelbilder) so angepasst, dass immer und an allen Stellen die optimale Nichtlinearität erreicht wird. Ein möglicher Aufbau hierfür verwendet einen SLM in der Zwischenbildebene, um diese lokale Anpassung zu erreichen.

Auch die Modulationsfrequenz (also die Ortsfrequenz) der Beleuchtungsstruktur kann erfindungsgemäß optimiert werden. Die Modulationsfrequenz kann beispielsweise so groß wie möglich gewählt werden, so dass noch ein ausreichendes Verhältnis von Modulationsamplitude zu Untergrund erreicht wird. Diese Evaluierung kann im Orts-oder im Ortsfrequenzraum erfolgen. Insbesondere kann die Modulationsfrequenz als Funktion der Eindringtiefe in die Probe verändert werden, um bei Proben mit Brechungsindex-Fehlanpassung der Abnahme des Modulationskontrastes mit zunehmender Tiefe durch reduzierte Modulationsfrequenz zu begegnen.

Alternativ kann die Modulationsfrequenz der Beleuchtungsstruktur so gering gewählt werden, dass mindestens ein Vielfaches dieser Frequenz noch vom Objektiv übertragen wird. Die Beleuchtungs- und Aufnahmeparameter wie Pulsabfolge, Belichtungszeit und Kameraverstärkung werden so lange variiert, bis die Amplitude der Vielfachen der Modulationsfrequenz bei minimalen Bleichen der Probe maximal sind. Bei diesen Beleuchtungs- und Aufnahmeparametern und einer Struktur-Modulationsfrequenz knapp unterhalb der Grenzfrequenz des Mikroskopobjektivs wird ein vollständiger Bildstapel für SPEM aufgenommen und daraus ein Ergebnisbild mit erhöhter Auflösung rekonstruiert.

Neben der Modulationsamplitude, die aus einem Einzelbild gewonnen werden kann, kann auch die Artefaktamplitude als Feedbackparameter für die Wahl der Modulationsfrequenz genommen werden. Die Artefaktamplitude wird dabei aus einem vollständigem SIM-Bildstapel und dem Verrechnungsalgorithmus berechnet und durch Verkleinern der Modulationsfrequenz soweit minimiert, bis sie die typische Wahrnehmungsschwelle unterschreitet. Die Artefaktamplitude berechnet sich dabei aus den Restmodulationsamplituden durch unvollständige Separierung verschiedenen Ordnungen und Einbrüchen im Frequenzspektrum aufgrund unzureichenden Modulationskontrastes. Sie ist ein quantitatives Maß für die Artefakte im rekonstruierten Ergebnisbild.

### Bezugszeichenliste

- 2: Probe
- 3: Probenhalter
- 5: Mikroskopobjektiv
- 7: Strukturierungsmodul
- 9: Pupille 9
- 17: Aktuator
- 19: Bildgeber
- 20: Kollimationsoptik
- 21: Mikroskopobjektiv
- 22: Probe
- 23: Laser
- 24: Lichtklappe
- 25: Abschwächer
- 26: Faserkoppler
- 27: Tubuslinse
- 28: Filter
- 29: Dichroitischer Strahlteiler
- 30: Scannerspiegel
- 31: Lochblende
- 32: Detektorfeld
- 33: Hauptstrahlteiler
- 34: Steuereinheit

- D: Detektionsmodul
- MI: Mikroskop
- L: Beleuchtungsmodul
- S: Abtastmodul
- LQ: Lichtquelle
- OL: Mikroskopobjektiv
- G: Gitter
- M: Modulator
- TLB: Tubuslinse Beleuchtung
- TLD: Tubuslinse Detektion
- ZB: Zwischenbildebene
- EF: Emissionsfilter
- DMD: Digitales Mikrospiegelfeld
- SLM: Räumlicher Lichtmodulator
- SM_P: Faserbasiertes Strukturierungsmodul in Pupillenebene

## Patentansprüche

1. Verfahren zur hochauflösenden Abbildung einer mit einem Fluoreszenzfarbstoff markierten Probe mittels eines Mikroskops, wobei die Probe sequentiell mit strukturiertem Anregungslicht mit mehreren Phasenlagen beleuchtet und das von der Probe emittierte Fluoreszenzlicht pro Phase in ein jeweiliges strukturiertes Einzelbild aufgenommen wird, so dass aus den Einzelbildern ein Ergebnisbild mit erhöhter Auflösung rekonstruiert wird **dadurch gekennzeichnet, dass** die Aufnahme des Fluoreszenzlichts in Zwischenbilder mit einer signifikant höheren Bildwiederholfrequenz erfolgt als bei der Aufnahme der Einzelbilder und für den Parameter "Pulsabfolge der Beleuchtung", also die Pulsdauer und/ oder die Pulswiederholfrequenz der Beleuchtung, Einstellung durch eine Rückkopplung anhand der Zwischenbilder und durch Variation des Parameters ermittelt wird, indem anhand der Zwischenbilder mittels eines Bildgebers, mittels dessen die Strukturierung des Anregungslichts erzeugt wird, die Pulsabfolge lokal variiert wird, um die Pulsfolge an die lokalen Gegebenheiten der Probe anzupassen.

2. Verfahren nach Anspruch 1 wobei die Variation des Parameters bei im wesentlichen konstanter mittlerer Leistung des Anregungslichts erfolgt.

3. Verfahren nach Anspruch 1 oder 2, wobei die Pulsabfolge pixelweise variiert wird.

4. Mikroskop, insbesondere Laser-Scanning-Mikroskop, mit einer Lichtquelle zur Erzeugung von Anregungslicht, einem Bildgeber zum Erzeugen einer Strukturierung des Anregungslichts und Variieren einer Pulsabfolge der Beleuchtung, einem ortsauflösenden Detektor sowie mit einer Steuereinheit, die zur Durchführung folgender Schritte eingerichtet ist:
- Beleuchten der Probe in mehreren Phasen sequentiell mit strukturiertem, gepulstem Anregungslicht mit Hilfe der Lichtquelle und des Bildgebers,
- Aufnehmen des von der Probe emittierten Fluoreszenzlichts pro Phase in ein jeweiliges strukturiertes Einzelbild mit Hilfe des orsauflösenden Detektors, so dass aus den Einzelbildern ein Ergebnisbild mit erhöhter Auflösung rekonstruierbar ist,
- Aufnehmen des Fluoreszenzlichts in Zwischenbilder mit einer signifikant höheren Bildwiederholfrequenz als bei der Aufnahme der Einzelbilder und
- Ermitteln einer Einstellung für einen Parameter "Pulsabfolge der Beleuchtung" durch eine Rückkopplung anhand der Zwischenbilder und durch Variation des Parameters, indem anhand der Zwischenbilder mittels des Bildgebers, mittels dessen die Strukturierung des Anregungslichts erzeugt wird, die Pulsabfolge lokal variiert wird,
- Rekonstruktion des Ergebnisbilds mit erhöhter Auflösung aus den Einzelbildern.

## Claims

1. Method for high-resolution imaging of a specimen that is marked with a fluorescence colourant using a microscope, wherein the specimen is illuminated sequentially with structured excitation light with a plurality of phase positions and the fluorescence light emitted by the specimen is recorded per phase in a respective structured individual image such that a resulting image with increased resolution is reconstructed from the individual images, **characterized in that** the recording of the fluorescence light in intermediate images is carried out with a significantly higher image repetition rate than is the case in the recording of the individual images, and for the parameter "pulse sequence of the illumination", that is to say the pulse duration and/or the pulse repetition rate of the illumination, setting is ascertained by way of feedback on the basis of the intermediate images and by varying the parameter by locally varying the pulse sequence on the basis of the intermediate images using an imaging system by means of which the structuring of the excitation light is generated so as to match the pulse sequence to the local conditions of the specimen.

2. Method according to Claim 1, wherein the variation of the parameter is effected at substantially constant medium power of the excitation light.

3. Method according to Claim 1 or 2, wherein the pulse sequence is varied in pixel-wise fashion.

4. Microscope, in particular laser scanning microscope, having a light source for generating excitation light, an imaging system for generating a structuring of the excitation light and varying a pulse sequence of the illumination, a spatially resolving detector, and having a control unit that is adapted for carrying out the following steps:
- illuminating the specimen in a plurality of phases sequentially with structured, pulsed excitation light using the light source and the imaging system,
- recording the fluorescence light emitted by the specimen per phase in a respective structured individual image using the spatially resolving detector, such that a resulting image with increased resolution is reconstructible from the individual images,
- recording the fluorescence light in intermediate images with a significantly higher image repetition rate then is the case in the recording of the individual images and
- ascertaining a setting for a parameter "pulse sequence of the illumination" by way of feedback on the basis of the intermediate images and by varying the parameter by locally varying the pulse sequence on the basis of the intermediate images using the imaging system, by means of which the structuring of the excitation light is generated,
- reconstructing the resulting image with increased resolution from the individual images.

## Revendications

1. Procédé destiné à reproduire à haute résolution une éprouvette marquée avec un colorant fluorescent au moyen d'un microscope, l'éprouvette étant éclairée de manière séquentielle avec de la lumière d'excitation à plusieurs positions de phase et la lumière fluorescente émise par l'éprouvette étant enregistrée par phase en une image individuelle respective structurée, de sorte qu'une image résultante soit reconstruite à résolution élevée à partir des images individuelles,
**caractérisé en ce que**
l'enregistrement de la lumière fluorescente en images intermédiaires s'effectue à une fréquence de répétition d'image significativement plus élevée que lors de l'enregistrement des images individuelles et pour le paramètre « séquence d'impulsions de l'éclairage », donc la durée d'impulsion et/ou la fréquence de répétition d'impulsions de l'éclairage, un réglage par une réinjection est déterminé à l'aide des images intermédiaires et par variation du paramètre, **en ce qu'**à l'aide des images intermédiaires au moyen d'un donneur d'image au moyen duquel est générée la structuration de l'image d'excitation, on fait varier localement la séquence d'impulsions, pour adapter la séquence d'impulsions aux conditions locales de l'éprouvette.

2. Procédé selon la revendication 1, la variation du paramètre s'effectuant à une puissance moyenne nettement plus constante de la lumière d'excitation.

3. Procédé selon la revendication 1 ou la revendication 2, lors duquel on fait varier pixel par pixel la séquence d'impulsions.

4. Microscope, notamment microscope à balayage laser, avec une source lumineuse destinée à générer de la lumière d'excitation, un donneur d'image pour générer une structuration de la lumière d'excitation et pour faire varier une séquence d'impulsions de l'éclairage, un détecteur à résolution locale, ainsi qu'avec une unité de commande qui est installée pour réaliser les étapes suivantes :
- éclairage de l'éprouvette en plusieurs phases séquentielles avec une lumière pulsée structurée, à l'aide de la source lumineuse et du donneur d'image,
- enregistrement par phase de la lumière fluorescente émise par l'éprouvette en une image individuelle respective structurée à l'aide du détecteur à résolution locale, de sorte qu'à partir des images individuelles, une image résultante à résolution élevée puisse être reconstruite,
- enregistrement de la lumière fluorescente en images intermédiaires à une fréquence de répétition d'image significativement plus élevée que lors de l'enregistrement des images individuelles et
- détermination d'un réglage pour un paramètre « séquence d'impulsions de l'éclairage » par une réinjection à l'aide des images intermédiaires et par variation du paramètre, en ce qu'à l'aide des images intermédiaires, au moyen du donneur d'images au moyen duquel est générée la structuration de la lumière d'excitation, la séquence d'impulsions soit variée localement,
- reconstruction de l'image résultante à résolution élevée, à partir des images individuelles.
